# EUROPÄISCHE PATENTSCHRIFT

(11) **EP 2 484 178 B1**
(45) Veröffentlichungstag und Bekanntmachung des Hinweises auf die Patenterteilung: **18.06.2014**
(21) Anmeldenummer: 10754487.6
(22) Anmeldetag: 14.09.2010
(51) Int. Cl.: H05B 7/148

(54) **VERFAHREN ZUR KONTROLLE EINES SCHMELZVORGANGES IN EINEM LICHTBOGENOFEN SOWIE SIGNALVERARBEITUNGSEINRICHTUNG, PROGRAMMCODE UND SPEICHERMEDIUM ZUR DURCHFÜHRUNG DIESES VERFAHRENS**
METHOD FOR CONTROLLING A MELT PROCESS IN AN ARC FURNACE AND SIGNAL PROCESSING COMPONENT, PROGRAM CODE, AND DATA MEDIUM FOR PERFORMING SAID METHOD
PROCÉDÉ DE CONTRÔLE D'UN PROCESSUS DE FUSION DANS UN FOUR À ARC ÉLECTRIQUE, AINSI QUE DISPOSITIF DE TRAITEMENT DE SIGNAUX, CODE DE PROGRAMME ET SUPPORT DE STOCKAGE POUR LA MISE EN OEUVRE DE CE PROCÉDÉ

(30) Priorität: 28.09.2009 DE 102009048660; 02.11.2009 DE 102009053169
(43) Veröffentlichungstag der Anmeldung: 08.08.2012
(73) Patentinhaber: Siemens Aktiengesellschaft, 80333 München (DE)
(72) Erfinder: DITTMER, Björn, 21357 Bradowick (DE); DÖBBELER, Arno, 91074 Herzogenaurach (DE); KRÜGER, Klaus, 22179 Hamburg (DE); LEADBETTER, Sascha, 80769 München (DE); MATSCHULLAT, Thomas, 90542 Eckental (DE); RIEGER, Detlef, 85598 Baldham (DE)
(86) Internationale Anmeldenummer: PCT/EP2010/063459
(87) Internationale Veröffentlichungsnummer: WO 2011/036071

(56) Entgegenhaltungen:
- WO-A1-2007/009924
- DE-A1- 2 615 202
- DE-A1-102005 034 378
- DE-B3-102005 034 409
- JP-A- 2008 115 408

## Beschreibung

Die Erfindung betrifft ein Verfahren zur Kontrolle eines Schmelzvorganges in einem Lichtbogenofen mit mindestens zwei Elektrode, bei dem durch Auswerten von durch das Innere eines Ofenbehälters verlaufenden Luft- und/oder Körperschallsignalen zumindest eine Art der folgenden Kennwerte für die Verteilung von Schmelzgut, Schmelze und Schlacke in der Ofenfüllung erzeugt wird. Die erste Art von Kennwerten steht für die Abschirmung der, auf die Ofenwand des Ofenbehälters auftreffenden thermischen Strahlung. Die zweite Art von Kennwerten steht für die Stückigkeit und den Schmelzzustand (im Folgenden wird kurz nur jeweils die Stückigkeit erwähnt) des Schmelzgutes im Volumen der Ofenfüllung, insbesondere im Bereich unterhalb der Elektroden. Die dritte Art von Kennwerten steht für die Veränderung des an der Ofenwand befindlichen Schmelzgutanteils.

Solche Verfahren sind aus Dokumente wie DE 10 2005 039 378 A1 bekannt.

Weiterhin bezieht sich die Erfindung auch auf eine Signalverarbeitungseinrichtung für einen Lichtbogenofen mit einem maschinenlesbaren Programmcode, einen solchen maschinenlesbaren Programmcode und ein Speichermedium mit einem solchen maschinenlesbaren Programmcode, die zur Steuerung der Vorgänge in einem Lichtbogenofen geeignet sind.

Die Verwendung von Schallsignalen (d. h. Körperschallsignale, erzeugt durch mindestens einen Lichtbogen, die durch das Schmelzgut weitergeleitet werden oder Luftschallsignale, die durch das Luftvolumen zwischen dem Schmelzgut weitergeleitet werden) zur Erzeugung unterschiedlicher Kennwerte ist bereits bekannt. Hierbei werden Schallschwingungen erfasst, die unter Einbeziehung der Strom- und Spannungsverläufe der Lichtbögen des Lichtbogenofens ausgewertet werden können. Schallsignale entstehen prinzipbedingt im Inneren der Ofenfüllung, da die Lichtbögen des Lichtbogenofens eine Schallquelle darstellen.

Gemäß der DE 10 2008 006 965 A1 ist es beispielsweise bekannt, dass zur Ermittlung eines sogenannten Strahlungsmaßes (im Folgenden auch kurz als SM bezeichnet) Körperschallschwingungen an der Ofenwand erfasst werden und aus einem Frequenzbereich der erfassten Schwingungen ein zugeordnetes Schwingungsauswertesignal ermittelt werden kann. Aus dem erfassten Elektrodenstrom lässt sich im selben Frequenzbereich ein zugeordnetes Stromauswertesignal, das als Ursache für die Schwingungserzeugung interpretiert wird, ermitteln. Das Strahlungsmaß ergibt sich dann im Prinzip als Quotient aus Schwingungsauswertesignal und Stromauswertesignal.

Gemäß der DE 10 2008 006 966 A1 ist es weiterhin bekannt, dass ein sogenanntes Stückigkeitsmaß (im Folgenden auch kurz mit M bezeichnet) ermittelt werden kann, indem der zugeführte Elektrodenstrom erfasst wird, von dem erfassten Elektrodenstrom ein Effektivwertmaß ermittelt wird, und aus dem erfassten Elektrodenstrom weiterhin in einem bestimmten Frequenzbereich des erfassten Elektrodenstroms ein zugeordneter Stromanteil ermittelt wird. Das Stückigkeitsmaß ergibt sich dann als Quotient aus dem Stromanteil und dem Effektivwertmaß.

Außerdem ist es aus der DE 10 2008 006 958 A1 bekannt, dass ein sogenanntes Maß für die Veränderung der Masse eines an der Begrenzung des Lichtbogenofens befindlichen Schmelzgutanteils (im Folgenden auch kurz als MM bezeichnet) ermittelt werden kann, indem der zugeführte Elektrodenstrom erfasst wird, aus dem in einem bestimmten Frequenzbereich ein Stromauswertesignal gewonnen wird. Weiterhin werden die Körperschallschwingungen erfasst und in dem bestimmten Frequenzbereich ein Schwingungsauswertesignal ermittelt. Zuletzt wird die Phasenverschiebung zwischen dem Stromauswertesignal und dem Schwingungsauswertesignal für eine Mehrzahl gemeinsamer Frequenzen ermittelt. Aus diesen ermittelten Phasenverschiebungen lässt sich ein Maß für die Veränderung der Masse des an der Begrenzung der Ofenwand befindlichen Schmelzgutes ableiten.

Mit den oben genannten Kennwerten lässt sich ein verfeinertes Verfahren zur Kontrolle des Schmelzvorganges im Lichtbogenofen durchführen. Um dies zu verdeutlichen, soll im Folgenden der in Lichtbogenöfen stattfindende Schmelzprozess genauer erläutert werden. Ein Lichtbogenofen dient der Herstellung von Flüssigmetall, in der Regel Stahl. Das Flüssigmetall wird aus festem Schmelzgut, etwa Schrott und/oder reduziertem Eisen (sogenannter Eisenschwamm oder DRI/HBI) sogar mit flüssigem und/oder festen Roheisen, zusammen mit weiteren Zuschlagsstoffen hergestellt. Dazu wird vorzugsweise mittels dreier Elektroden Energie zum Aufschmelzen des Schmelzguts in den Lichtbogenofen eingebracht, in der Regel in Form eines Lichtbogens zwischen Elektrode und Schmelzgut. Damit das Aufschmelzen möglichst effizient erfolgen kann, sollte möglichst die gesamte vom Lichtbogen bereitgestellte Energie in das Schmelzgut eingebracht werden. Als Schmelzgut wird dabei der zu schmelzende Feststoff verstanden, als geschmolzenes Gut Flüssigmetall und/oder Schlacke. Schmelzgut und geschmolzenes Gut zusammengenommen ergeben die Ofenfüllung.

Aufgrund der vorgegebenen Fahrweise bei gebräuchlichen Lichtbogenöfen kann es jedoch dazu kommen, dass der Lichtbogen während des Einschmelzprozesses frei brennt. D.h. die vom Lichtbogen, ausgebildet zwischen Elektrode und Schmelzgut, ausgehende thermische Strahlung gelangt in hohem Maß an eine Begrenzung des Lichtbogenofens, insbesondere eine gekühlte Wand des Lichtbogenofens. Dadurch steigt der Energieverbrauch des Ofens, indem einerseits Energie des Lichtbogenofens nur in geringerem Umfang in das Schmelzgut eingebracht wird, andererseits mehr Energie über die Ofenkühlung abgeführt wird.

Hier setzt die Überlegung an, zur Steuerung der Fahrweise von Lichtbogenöfen und Regelung der Lichtbogenleistung das Maß MM für die Veränderung des an der Ofenwand befindlichen Schmelzguts, das Stückigkeitsmaß M, das Strahlungsmaß SM oder ähnlich geeignete Kennwerte für die Verteilung von Schmelzgut, Schmelze und Schlacke in der Ofenfüllung zu verwenden. Das Stückigkeitsmaß M kann verwendet werden, um den Elektrodenstrom-Sollwert an den Elektroden zu regeln. Ist beispielsweise unter einer Elektrode verhältnismäßig leichter Schrott, d. h. ein hoher Anteil von Luftvolumen im Schrott, dann kann die Abstrahlleistung zurückgefahren werden, um das erwähnte Freibrennen des Lichtbogens durch zu schnelles Aufschmelzen des leichten Schrottes zu verhindern. Wird ein zu hohes Strahlungsmaß SM an den Ofenwänden festgestellt, so kann die Abstrahlleistung des Lichtbogens zurückgefahren werden, um eine übermäßige thermische Beanspruchung der Ofenwände sowie eine hohe Verlustleistung zu vermeiden. Wird bei der Ermittlung des Abschirmungs-Maßes SM festgestellt, dass ein Teil der Ofenwand nicht durch Schmelzgut abgeschirmt wird, kann die Abstrahlleistung zurückgefahren werden, um ein Freibrennen des Lichtbogens hin zu diesem freien Wandabschnitt zu verhindern. Dabei können die vorgenannten Signale nicht nur zur Leistungsreduzierung sondern in der inversen Interpretation auch zur Leistungserhöhung genutzt werden. Da sich die oben angegebenen Maßnahmen gegenseitig beeinflussen ist es allerdings bei manuellem Eingriff in das Fahrprogramm des Lichtbogenofens schwer abzuschätzen, wie stark in den Prozess eingegriffen werden soll.

Aufgabe der vorliegenden Erfindung ist es, ein Verfahren der eingangs genannten Art dahingehend zu verbessern, dass die Regelung der Lichtbogenleistung bei möglichst geringem Energieverbrauch und möglichst geringem Verschleiß der Ofenkomponenten ermöglicht wird. Ferner ist es Aufgabe der Erfindung, eine das Verfahren veranlassende Signalverarbeitungseinrichtung, bzw. ein Speichermedium und ein Programmcode hierfür anzugeben.

Diese Aufgabe wird erfindungsgemäß dadurch gelöst, dass für den thermischen Einflussbereich jedes Lichtbogens lokale Kennwerte erzeugt werden. Vorteilhaft ist es, die zur Verwendung kommenden Sensoren so an dem Ofen anzuordnen, dass die Sensoren den Elektroden (Lichtbogen) gegenüber stehen. Der Vorteil dieser Maßnahme besteht darin, dass ein genaueres Bild vom Ablauf des Schmelzprozesses im Lichtbogenofen erzeugt werden kann, da dieser aufgrund häufig inhomogener Schrottfüllungen an jeder Elektrode anders abläuft. Weiterhin ist es erfindungsgemäß vorgesehen, dass von den lokalen Kennwerten auf bestehende oder bevorstehende lokale thermische Belastungsspitzen in den Einflussbereichen der Lichtbögen geschlossen wird, auch wenn diese zu dem Zeitpunkt noch nicht zu einer messbaren Temperaturbelastung der Panels führen. Dies kann in der oben beschriebenen Weise erfolgen. So ist ein Freibrennen eines bestimmten Lichtbogens dann wahrscheinlich, wenn beispielsweise der Wandabschnitt der Ofenwand durch Abschmelzen des Schrotts freigelegt wird, der diesem Lichtbogen am nächsten ist. Dies kann erfindungsgemäß lokal in diesem Wandbereich durch Auswertung des Abschirmungs-Kennwertes SM ermittelt werden. Hierdurch ist vorteilhaft eine sehr frühe Detektion eines Ereignisses möglich, welches erst in Zukunft eine thermische Belastungsspitze in dem Einflussbereich der betreffenden Elektrode erzeugen wird, durch das Freibrennen dieses Lichtbogens zu der freigelegten Wand hin. Da die eigentliche thermische Belastungsspitze noch bevorsteht, kann diese vorteilhaft bereits an ihrem Entstehen gehindert werden.

Erfindungsgemäß ist weiterhin vorgesehen, dass in Abhängigkeit von den erzeugten Kennwerten vorrangig zunächst die Energieverteilung über die Elektroden so lange wie erforderlich derart geändert wird, dass die thermischen Belastungsspitzen abgeschwächt werden oder deren Entstehung vermieden wird. Um dies am genannten Beispiel einer Schrottabschmelzung in einem Teilbereich der Ofenwand zu verdeutlichen, kann das folgende Betriebsregime beschrieben werden. Derjenige Lichtbogen, der dem betroffenen Wandelement am nächsten ist, also derjenige Lichtbogen, der am Freibrennen gehindert werden soll, muss zurückgeregelt werden, während dieses Erfordernis bei den anderen Lichtbögen nicht besteht. Dies kann erreicht werden, indem erfindungsgemäß der Sollwert für die Strangimpedanz des betroffenen Lichtbogens angepasst wird, so dass die an die Umgebung abgegebene Strahlungsleistung des betroffenen Lichtbogens sinkt und diejenige der anderen beiden Lichtbögen etwas steigt. Hierbei steht vorteilhaft eine sehr schnell ansprechende Regelgröße zur Verfügung, wobei die umgesetzte thermische Summenleistung im Lichtbogenofen zunächst nicht vermindert werden muss. Daher ist dieses Regelregime vorteilhaft besonders effizient.

Weiterhin ist erfindungsgemäß vorgesehen, dass in Abhängigkeit von den erzeugten Kennwerten nachrangig die thermische Leistung der Lichtbögen durch Verringerung der Sekundärspannung eines die Lichtbögen versorgenden Ofentransformators und/oder durch Erhöhen der Reaktanz einer seriell zu den Lichtbögen geschalteten Zusatzreaktanz so lange wie erforderlich verringert wird. Diese Maßnahme wird getroffen, wenn der durch die vorrangige Änderung der Energieverteilung erreichte Effekt nicht ausreicht oder es absehbar ist, dass dieser Effekt nicht ausreichen wird, um die thermischen Belastungsspitzen abzubauen oder zu vermeiden.

Die die Lichtbögen speisende Spannung wird dadurch geregelt, dass die Ausgangsspannung des Ofentransformators beispielsweise mittels Laststufenschalter variiert wird. Dies erfolgt mechanisch, indem Windungen der Primär- oder Sekundärwicklung des Ofentransformators (auch als Trafostufe oder Transformatorstufe bezeichnet) zu- bzw. abgeschaltet werden. Hierbei ist ein gewisse elektrische und mechanische Beanspruchung und damit Verschleiß unvermeidlich, weswegen diese Maßnahme vorteilhaft nur durchgeführt werden kann, wenn die vorher beschriebenen Maßnahmen alleine nicht ausreichen. Dies bewirkt vorteilhaft, dass die Laststufenschalter seltener geschaltet werden mit positiven Auswirkungen auf den Wartungsaufwand für den Ofentransformator. Außerdem ist das Verstellen der Transformatorstufe als Reaktion auf die erzeugten Kennwerte deutlich langsamer als die vorteilhafte Regelung der Strangimpedanzen.

In ähnlicher Weise wie oben beispielhaft anhand des Kennwertes SM beschrieben, können die Kennwerte MM und M herangezogen werden. Der Kennwert M kann beispielsweise dazu dienen, die Stückigkeit des Schmelzgutes unterhalb der einzelnen Elektroden zu ermitteln. Hierbei kann frühzeitig erkannt werden, ob der Schmelzfortschritt unterhalb einer Elektrode schneller voranschreiten wird, weil z. B. verhältnismäßig leichter Schrott mit einem hohen Anteil an Luftvolumen unter dieser Elektrode vorliegt. Liegt unter einer anderen Elektrode beispielsweise ein massives Schwerschrottteil vor, so wird der Lichtbogen dieser Elektrode sehr viel länger benötigen, um den dort befindlichen Teil des Schmelzgutes aufzuschmelzen. Die Elektrode, unter der sich massiver Schrott befindet, kann nicht weiter in den unteren Bereich des Ofengefäßes vordringen und der entsprechende Lichtbogen wird daher unverhältnismäßig stark Abstrahlung an die Begrenzung des Lichtbogenofens abgeben. Durch Beeinflussung der Impedanz- bzw. Stromsollwerte kann die Abstrahlung des betroffenen Lichtbogens verringert werden. Wird also eine ungleiche Verteilung der Stückigkeit unter den Elektroden festgestellt, so können diese hinsichtlich der umgesetzten Lichtbogenleistung durch Anpassung der Strangimpedanzen der durch die Lichtbögen gebildeten Stränge derart eingestellt werden, dass der Schmelzfortschritt unter allen Elektroden annähernd gleich ist. Dies bedeutet, dass Elektroden, unter denen sich leichter Schrott befindet, mit einer höheren Strangimpedanz eingestellt werden, als Elektroden, unter denen sich schwerer Schrott befindet.

Der Kennwert MM ist ein Maß für die Veränderung der an der Ofenwand anliegenden Masse. Wird beispielsweise eine starke Masseveränderung an einem Bereich der Ofenwand detektiert, so deutet das auf einen eventuell bevorstehenden Schrotteinsturz hin. Dieser Wert wird daher bevorzugt dafür verwendet prädiktiv ein Anheben der eventuell betroffenen Elektrode durch Vergrößerung der Strangimpedanzen zu erzeugen. Die Gewichtung dieser Ausgabe kann je nach Erfahrung gering oder größer erfolgen. Gegebenfalls wird auch prädiktiv ein direkter Heben - Befehl an die Tragarmhydraulik abgesetzt, entsprechend der Zuverlässigkeit der Vorhersage.

Gemäß einer vorteilhaften Ausgestaltung der Erfindung ist vorgesehen, dass die Kennwerte SM für das Strahlungsmaß, die Kennwerte M für die Stückigkeit bzw. die Kennwerte MM für die Veränderung des Schmelzgutanteils an der Ofenwand jeweils mit einem Kennwert E für die seit Zugabe der letzten Charge Schmelzgut eingebrachte Energie pro Masseneinheit Schmelzgut (spezifische Energie) dieser letzten Charge verknüpft werden. Hierzu ist zu bemerken, dass das Schmelzgut in den laufenden Prozess chargenweise zugegeben wird, da das Aufschmelzen des Schmelzgutes (Schrott) eine beträchtliche Volumenänderung zur Folge hat. Das frei werdende Volumen im oberen Teil des Ofenbehälters wird dann jeweils mit erneuten Chargen von Schmelzgut aufgefüllt. Nach jeder Zugabe einer Charge wird die in den Ofen eingebrachte Energie durch Messungen ermittelt und auf die Masse der Charge umgerechnet, so dass ein Anhaltspunkt entsteht, wie hoch der Anteil an bereits aufgeschmolzenem Gut in der Ofenfüllung ist. Die Verknüpfung dieses Kennwertes E mit den anderen Kennwerten ermöglicht vorteilhaft, die Höhe der anderen Kennwerte im Kontext des Schmelzfortschrittes im Lichtbogenofen richtig zu deuten und in Abhängigkeit davon die richtigen Maßnahmen einzuleiten. So sind beispielsweise bei einem fortgeschrittenen Schmelzprozess Schrotteinstürze sehr viel wahrscheinlicher und die thermische Grundbelastung des Schmelzofens bereits höher.

Eine weitere Ausgestaltung des erfindungsgemäßen Verfahrens sieht vor, dass zusätzlich für den thermischen Einflussbereich jeder Elektrode lokale Kennwerte T für den absoluten Temperaturanstieg oder allgemein für die thermische Belastung an der Ofenwand und/oder lokale Kennwerte für den Gradienten dieses Temperaturanstiegs bzw. der thermischen Belastung (Kennwert G) erzeugt werden, und diese Kennwerte mit den lokal zugehörigen Kennwerten SM für das Strahlungsmaß an der Ofenwand verknüpft werden. Hierbei spielt die Überlegung eine Rolle, dass das Strahlungsmaß an den Ofenwänden als solches noch keinen genügenden Rückschluss auf kritisch ablaufende Prozesse ermöglicht. Wenn der Ofen voll mit Schrott ist, ist auch eine volle Lichtbogenabstrahlung erwünscht, da die Ofenwände zunächst durch den Schrott geschützt werden. Der Einschmelzvorgang hingegen verläuft schneller. Gegen Ende des Schmelzvorganges, wenn die Temperatur an der Ofenwand bereits erhöht ist, wird auch ein Anstieg des Strahlungsmaßes an den Ofenwänden kritischer bewertet werden müssen. Weiterhin ist vorhersehbar, dass bei einem hohen Gradienten der thermischen Belastung ein kritisches Maß der thermischen Belastung schneller erreicht werden wird und deswegen drastischere Maßnahmen zu dessen Verhinderung getroffen werden müssen. Die Verwendung der Kennwerte T und/oder G können gemäß einer anderen Alternative der Erfindung auch den Kennwert E ersetzen, so dass dieser in diesem Fall nicht mit den Kennwert SM verknüpft wird. Je nach Art der Kühlung der Wandelemente müssen auch die Massenströme an Kühlmittel mit betrachtet werden, da in einigen Fällen erst dadurch ein Rückschluss auf die thermische Belastung der Ofenwand gezogen werden kann.

Weiterhin ist es auch vorteilhaft, wenn die Wärmeleistung im Inneren des Ofengefäßes zusätzlich durch chemische Reaktionen unter Einsatz eines Brenners und/oder einer Lanze erhöht wird, wobei in Abhängigkeit von den erzeugten Kennwerten M, MM, SM, E, T und G die thermische Leistung der chemischen Reaktion durch Verminderung der Zufuhr an Brennstoff zum Brenner und/oder an Sauerstoff zur Lanze so lange wie erforderlich verringert wird. Im Brenner werden vorrangig Brennstoffe verbrannt, wodurch dem Schmelzprozess chemische Energie zugeführt wird. Um die Verbrennung am Brenner oder auch andere Oxidationsvorgänge im Schmelzgut bzw. in der Schmelze zu beschleunigen, kann zusätzlich mittels sogenannter Lanzen oder kohärenten Brennern Sauerstoff in das Innere der Ofenfüllung eingeblasen werden.

Da sowohl der Einsatz von Brennern als auch der Einsatz von Lanzen letztendlich zu einer zusätzlichen Erwärmung der Ofenfüllung führen, ist es besonders vorteilhaft, in das Regelungskonzept auch diese Prozesse einzubeziehen. Hierfür können die oben genannten Kennwerte herangezogen werden und in geeigneter Weise ausgewertet werden. Dabei kann das Regeln der Vorgänge an Brennern und Lanzen bereits parallel mit dem vorrangigen Regeln der Strangimpedanzen erfolgen und/oder auch nachrangig mit dem Regeln der Zusatzreaktanz und/oder Transformatorsekundärspannung. Vorteilhaft ist der Schmelzprozess unter Einbeziehung von Brennern und Lanzen in das Regelungskonzept noch besser kontrollierbar.

Gemäß einer besonderen Ausgestaltung der Erfindung werden für das Regeln von Brennern und Lanzen die Kennwerte SM für auf die Ofenwand auftreffende thermische Strahlung und/oder die Kennwerte MM als Maß für die Veränderung des an der Ofenwand anliegenden Schmelzgutanteils verwendet. Diese werden mit dem Kennwert E für die seit Zugabe der letzten Charge Schmelzgut eingebrachte thermische Energie pro Masseneinheit Schmelzgut der letzten Charge verknüpft. Wie diese Kombination von Kennwerten hinsichtlich der thermischen Belastung des Lichtbogenofens ausgewertet werden kann, ist bereits erläutert worden.

Gemäß einer weiteren Ausgestaltung der Erfindung können zusätzlich zu den bereits aufgeführten Kennwerten für die Regelung von Brennern und/oder Lanzen die Kennwerte T für den Temperaturanstieg an der Ofenwand und/oder die lokalen Kennwerte G für den Gradienten dieses Temperaturanstiegs verwendet werden, wobei diese Kennwerte mit den lokal zugehörigen Kennwerten SM und MM verknüpft werden.

Weiterhin wird die Aufgabe durch eine Signalverarbeitungseinrichtung für einen Lichtbogenofen mit einem maschinenlesbaren Programmcode, mit einem solchen maschinenlesbaren Programmcode und mit einem Speichermedium für einen solchen maschinenlesbaren Programmcode gelöst, welcher Steuerbefehle aufweist, die die Signalverarbeitungseinrichtung zur Durchführung eines Verfahrens nach der oben beschriebenen Weise veranlassen. Hiermit lässt sich das oben beschriebene Verfahren in vorteilhafter Weise automatisch ausführen.

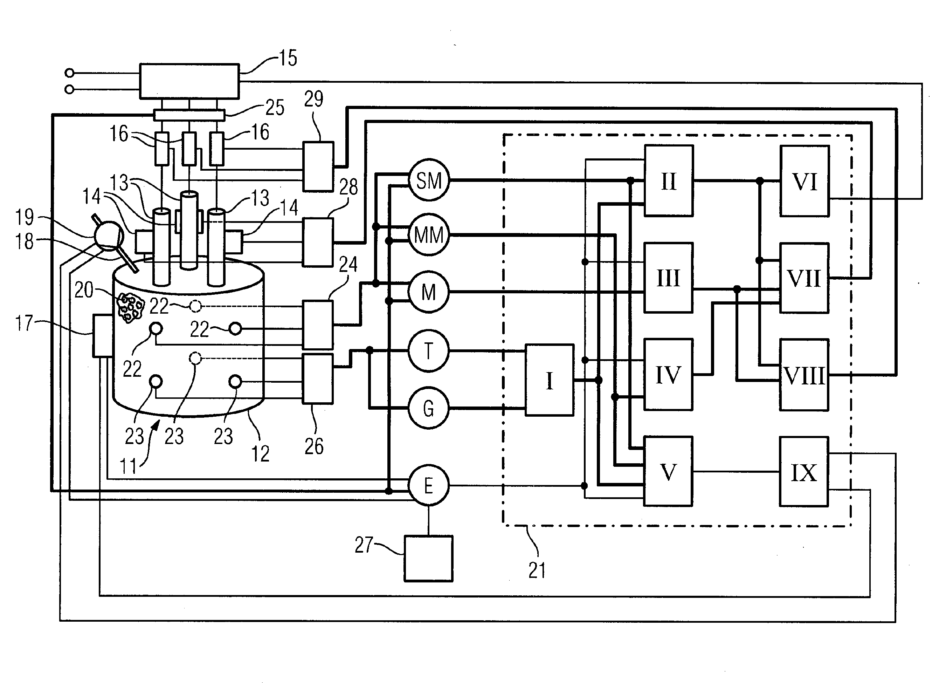

Weitere Einzelheiten der Erfindung sind im Folgenden anhand der Zeichnung beschrieben. Die einzige Figur zeigt die schematische dreidimensionale Ansicht eines Lichtbogenofens und ein Blockschaltbild einer an diesen angeschlossenen Regelung, geeignet zur Durchführung eines Ausführungsbeispieles des erfindungsgemäßen Verfahrens.

Ein Lichtbogenofen 11 weist einen Ofenbehälter 12 auf, der in nicht dargestellter Weise mit Schmelzgut (Schrott) befüllt ist. In den Ofenbehälter ragen vorzugsweise drei Elektroden 13 hinein, die mittels Stellgliedern 14 (Hydraulik- oder Stellmotoren) horizontal entlang ihrer Längsachse angehoben bzw. abgesenkt werden können. Die Elektroden 13 werden über einen Ofentransformator 15 mit Drehstrom versorgt, wobei jeder Elektrode 13 außerdem eine Zusatzreaktanz 16 zugeordnet werden kann, mit der gezielt elektrische Verlustleistung erzeugt werden kann. Außerdem ist weiterhin ein Brenner 17 schematisch dargestellt, mit dem sich durch Verbrennung eines Brennstoffes chemische Energie in den Ofenbehälter 12 einleiten lässt. Eine Lanze 18 ragt ebenfalls in den Ofenbehälter 12 hinein, wobei über eine Pumpe 19 Gase in den Ofenbehälter und damit in die Ofenfüllung eingeblasen werden können.

Um Schmelzgut 20 in Form von Metallschrott im Lichtbogenofen 11 aufzuschmelzen, wird an den Elektroden 13 ein Lichtbogen gezündet, wodurch Wärmeenergie im Inneren des Ofenbehälters entsteht. Hierbei können, wie bereits erwähnt, die Lanze 18 und der Brenner 17 zusätzlich zur Hilfe genommen werden, um einen Eintrag chemischer Energie in den Ofenbehälter zu bewirken. Während des Schmelzvorgangs läuft ein automatischer Regelungsprozess ab, der im Folgenden anhand des in der Figur dargestellten Blockschaltbildes näher erläutert werden soll. Das Regelkonzept gemäß der Erfindung bedient sich dabei verschiedener Eingangsgrößen, deren Erzeugung an sich bekannt ist. Das erfindungsgemäße Regelkonzept ist mittels einer strichpunktierten Linie 21 in der Figur hervorgehoben. Die Eingangsgrößen, die bei dem Regelkonzept Verwendung finden, sind im Einzelnen ein Kennwert SM, der das Maß für auf die Ofenwand des Ofenbehälters 12 auftreffende thermische Strahlung angibt, ein Kennwert M als Maß für die Stückigkeit des Schmelzgutes 20 im Volumen der Ofenfüllung, und zwar im Bereich der Elektroden 13, ein Kennwert MM als Maß für die Veränderung des an der Ofenwand anliegenden Anteils an Schmelzgut 20, ein Kennwert E für die seit der Zugabe der letzten Charge an Schmelzgut eingebrachte spezifische Energie pro Masseeinheit Schmelzgut. Ein Kennwert T für den Temperaturanstieg bzw. allgemein für die thermische Belastung an der Ofenwand und ein Kennwert G für den Gradienten dieser thermischen Belastung (beispielsweise des Temperaturanstiegs). Diese Eingangsgrößen sind in der Figur in entsprechenden Kreisen dargestellt, wobei diese Kreise gleichzeitig Recheneinheiten darstellen, die aus den Messwerten (hierzu im Folgenden mehr) die erforderlichen Eingangsgrößen generieren. Generell ist weiterhin zu bemerken, dass Signalleitungen, durch die lediglich ein Signal geleitet wird, durch schmale Linien und Signalleitungen, durch die mehrere Signale geführt werden, durch breite Linien dargestellt werden. Die breiten Linien können also entweder als Bündel mehrerer Leitungen ausgeführt sein, die aus Gründen der Übersichtlichkeit lediglich durch die breite Linie dargestellt sind. Es ist aber auch möglich, diese Signalleitungen beispielsweise durch einen Daten-Bus zu realisieren. Bei den in den breiten Signalleitungen geführten Signalen handelt es sich um Gruppen von Signalen, die durch den Aufbau des Lichtbogenofens 11 mit drei Elektroden und jeweils drei den Elektroden zuzuordnenden weiteren Einrichtungen wie Zusatzreaktanzen 16, Stellgliedern 14 sowie Sensoren 22, 23 bedingt sind. Durch die einzeln anzusteuernden Elektroden 13 sind in diesen Leitungen jeweils parallel verlaufende Mess- oder Steuersignale von Nöten.

Im Einzelnen werden die Eingangsgrößen wie folgt generiert. Für das Strahlungsmaß SM sind vorzugsweise drei Körperschallsensoren 22 an den Ofenwänden derart angebracht, dass jeder der Sensoren 22 lokal die im Inneren des Ofenbehälters 12 verlaufenden Schallsignale im Einflussbereich einer der drei Elektroden 13 misst. Die Signale werden in einem Konfigurationsbaustein 24 zusammengefasst und dienen unter Anwendung des obenstehend beschriebenen Auswertungsprinzips unter Zuhilfenahme des zeitlichen Verlaufs des Elektrodenstroms mittels einer Auswertungseinheit 25 der Generierung des Strahlungsmaßes SM, des Stückigkeitsmaßes M und des Maßes für die Veränderung des an der Ofenwand anliegenden Feststoffes MM. Weiterhin wird in den Einflussbereichen der Elektroden die Temperatur in den Kühlelementen oder ein vergleichbares Maß zur Beschreibung der thermischen Belastung des Ofenbehälters 12 mittels der Sensoren 23 gemessen. Die Sensoren 23 geben ihre Signale an die Konfigurationseinrichtung 26 ab, wobei die Signale zur Generierung der Temperaturdifferenz T (bevorzugt als Differenz zur Vorlauftemperatur des Kühlsystems, ggf. auch als Temperaturdifferenz zu einem aus diesen Werten gebildeten Mittelwert) und des Temperaturgradienten G ausgewertet wird. Im Übrigen wird die pro Charge eingebrachte spezifische Energie E berechnet, wobei hierzu die elektrische Leistung des Ofentransformators über die Auswertungseinheit 25 sowie die thermische Leistung aufgrund des Mengendurchsatzes an Sauerstoff in der Lanze 18 und des Mengendurchsatzes an Brennstoff in dem Brenner 17 herangeführt wird. Hierbei werden zusätzlich die Daten eines Speichers 27 abgerufen, wobei hier die Masse der jeweils eingebrachten Chargen sowie der Zeitpunkt des Einbringens dieser Chargen in den Ofenbehälter 12 und die zu diesem Zeitpunkt vorliegenden Wandtemperaturen für die Berechnung der Temperaturdifferenz T abgelegt sind.

Das Regelungssystem gemäß dem dargestellten Ausführungsbeispiel der Signalverarbeitungseinrichtung wird mit fünf verschiedenen Reglern I bis V und vier Berechnungsmodulen VI bis IX betrieben. Die Regler sind vorzugsweise als Fuzzy-Regler realisiert. Die Berechnungsmodule weisen fünf Ausgänge auf, mit denen der Lichtbogenofen und seine Komponenten kontrolliert werden (hierzu im Folgenden mehr). Der Fuzzy-Regler I dient zur Klassifizierung des thermischen Ofenzustandes. Dieser Regler gibt somit einen Wert aus, wie kritisch der thermische Ofenzustand aktuell ist. Dieser Wert wird lokal für alle drei thermischen Einflussbereiche der Lichtbögen (auch Hotsspots genannt) berechnet. Für jede Elektrode wird der Temperaturverlauf der Wandelemente, die an die Einflussbereiche der Lichtbögen 13 grenzen, verfolgt. Kritische Zustände werden ermittelt, wenn entweder die thermische Belastung T der betreffenden Wandelemente selbst bereits sehr hoch ist oder ein steiler Anstieg G der thermischen Belastung zu verzeichnen ist. Bei geringer thermischer Belastung der Wandelemente wird demgegenüber ein unkritischer Zustand festgestellt. Hierfür kann auch ein abgestuftes Maß verwendet werden.

Die Information des Fuzzy-Reglers I wird als Eingangsgröße für den Fuzzy-Regler II (auch den Fuzzy-Regler V) verwendet, welcher die Abschirmung der Ofenwände durch Schmelzgut und im weiteren Verlauf des Verfahrens auch durch Schaumschlacke quantifiziert. Als weitere Eingangsgrößen wird das Strahlungsmaß SM für die thermischen Einflusszonen der Elektroden und die pro Korb eingebrachte spezifische Energie verwendet. Hieraus berechnet das Berechnungsmodul II Ausgangsgrößen; dies sind jeweils Korrekturvorschläge zur vom Fahrprogramm vorgegebenen Transformatorstufe, die in das Berechnungsmodul VI eingespeist werden, Korrekturvorschläge für die Zusatzreaktanz, die in das Berechnungsmodul VIII eingespeist werden und Korrekturwerte für die Strangimpedanzen der Lichtbögen 13, die in das Berechnungsmodul VII eingespeist werden. Letztere korrigieren den gemäß dem Fahrprogramm vorgegebenen Referenzwert für die Strangimpedanzen an den Lichtbögen, so dass es zu einer Umverteilung des Energieumsatzes und der Abstrahlleistung in den Lichtbögen kommt, um kritische Zustände an zumindest einem thermischen Einflussbereich des zugehörigen Lichtbogens abzuschwächen.

Der Fuzzy-Regler III berücksichtigt den Zustand des Schmelzguts, insbesondere dessen Veränderung direkt unter den Elektroden (Veränderung bedeutet vorrangig die Schrottbewegung und das Vorliegen von sogenanntem Kaltschrott, die bei der Prozessführung des Schmelzvorganges teilweise chaotisch verläuft). Als Eingangsgrößen werden das Stückigkeitsmaß M und die pro Charge eingebrachte spezifische Energie E verwendet. Hierbei handelt es sich also insgesamt um vier Eingangsgrößen. Aus diesen berechnet der Regler Änderungsvorschläge für die Strangimpedanzen, die sich in der oben bereits beschriebenen Weise auf die Ansteuerung der Elektroden 13 auswirkt. Wird beispielsweise eine starke Veränderung des Schmelzgutes unter einer der Elektroden festgestellt (beispielsweise durch Nachrutschen von Kaltschrott), so wird ein Vorschlagswert dahingehend ausgegeben, den Sollwert für die Strangimpedanz dieser Elektrode zu verringern. Hierdurch wird mittels des Stellgliedes 14 die betreffende Elektrode 13 weiter in den Ofen hinabgefahren, wodurch sich die Lichtbogenlänge verkürzt und der Energieeintrag in den Schrott im Vergleich zum Energieeintrag durch die beiden anderen Elektroden 13 vergrößert wird.

Der Fuzzy-Regler IV wertet die Veränderung der Masse des Schmelzgutes an der Ofenwand aus, und zwar in den thermischen Einflussbereichen der Elektroden 13. Als Eingangsgrößen werden das Maß der sich verändernden Masse MM und die pro Charge eingebrachte spezifische Energie E, also vier Eingangssignale, verwendet. Der Regler berechnet als Ausgangsgrößen Änderungsvorschläge für die Sollwerte der Strangimpedanzen in der bereits beschriebenen Weise. Wird beispielsweise eine starke Massenveränderung an einem Bereich der Ofenwand detektiert, so deutet das auf einen eventuell bevorstehenden oder erfolgten Schrotteinsturz unter Freilegung des Wandabschnittes hin. Der Regler gibt als Ausgangssignal vorbeugend aus, dass die betroffene Elektrode angehoben wird, wobei sich durch den länger werdenden Lichtbogen die Strangimpedanz dieser Elektrode vergrößert.

Mit dem Fuzzy-Regler V werden Brenner 17 und Lanze 18 beeinflusst und somit die Einbringung der chemischen Energie gesteuert. Als Eingangsgrößen werden das Maß MM für die Veränderung des Feststoffanteils an der Wand und das Strahlungsmaß SM, also sechs Eingangsgrößen, verwendet. Zusätzlich werden noch die vier weiteren Eingangsgrößen der seit der letzten Charge eingebrachten spezifischen Energie E sowie die Ausgangsgrößen des Fuzzy-Reglers I, also weitere vier Eingangsgrößen in den Fuzzy-Regler V eingespeist. Der Fuzzy-Regler berechnet daraus als Ausgangsgrößen Änderungsvorschläge für den Eintrag der chemischen Energie, d. h. Änderungsvorschläge für die Sollwerte des Brenners 17 und der Lanze 18.

Alle Ausgangsgrößen der Fuzzy-Regler II bis V werden in den Berechnungsmodulen VI bis IX zusammengefasst und bearbeitet. Hierbei werden bei der Regelung der Ausgangsgrößen in den Berechnungsmodulen VI, VIII und IX Schwellwerte für einen aktiven Reglereingriff berücksichtigt ebenso wie die zugehörigen Hysteresen, was bewirkt, dass Regelschwingungen des Regelungssystems gedämpft werden und vorrangig eine Regelung des im Schmelzofen ablaufenden Prozesses über eine Umverteilung der Energie an den Elektroden 13 durch Anheben bzw. Absenken der geforderten Strangimpedanzen erfolgt. Hierbei handelt es sich um diejenige Regelgröße, die am einfachsten ohne mechanischen Verschleiß und ohne Verlustleistung umgesetzt werden kann. Erst wenn diese Regelmaßnahmen nicht ausreichen, um die Prozesse in dem Lichtbogenofen 11 und damit die Eingangsgrößen des Regelsystems zu normalisieren, werden die Schwellwerte der Berechnungsmodule VI, VIII und IX überschritten und damit drastischere Regelungsmaßnahmen durch das Regelsystem 21 angestoßen. Das Zusammenwirken der verschiedenen Fuzzy-Regler und Berechnungsmodule muss für jeden Lichtbogenofen 11 individuell angepasst werden und bewirkt nach einer Einstellung eine optimierte dynamische Reaktion des Energieeintrags auf die Veränderung des aktuellen Einschmelzzustandes des Schmelzgutes.

Die Arbeitsweise der Module VI bis IX wird im Folgenden noch näher beschrieben. Das Modul VI setzt die kontinuierlichen Rohwerte für die Transformatorstufen-Änderung in einen diskreten Wert um. Mit Hilfe der Hysterese wird verhindert, dass die Stufenschalter des Ofentransformators zu häufig geschaltet werden müssen. Wird beispielsweise nur einer der Wandbereiche schlecht abgeschirmt und sind die restlichen Wandbereiche gut abgeschirmt, gibt der Fuzzy-Regler II die Änderungsvorschläge für eine asymmetrische Energieverteilung aus, die vorrangig im Modul VII umgesetzt wird. Dies bedeutet, dass der thermisch stark belastete Wandbereich durch eine Änderung der Strangimpedanz der betreffenden Elektrode 13 entlastet wird.

Das Berechnungsmodul VI hat nur einen Ausgang, der auf den Stufenschalter des Ofentransformators 15 wirkt und mit dem dessen Ausgangsspannung verändert werden kann.

Im Berechnungsmodul VII wird ein analytisches Modell für die Lastverteilung verwendet. Auf diese Weise kann rechtzeitig Strahlungsenergie von schlecht abgeschirmten Wandteilen von den betreffenden Elektroden auf andere Elektroden umverteilt werden. Hierbei werden die Signale der Fuzzy-Regler II, III und IV zusammengefasst und daraus eine geeignete Umverteilung der Sollwerte für die Strangimpedanz der einzelnen Elektroden errechnet. Hierfür kann der Einfluss der Fuzzy-Regler II, III und IV je nach Gegebenheiten des Lichtbogenofens 11 und der daraus folgenden Auswirkung der Veränderung der ermittelten Maße gewichtet berücksichtigt werden. Eine besonders einfache Möglichkeit liegt in der Mittlung aller Signalausgänge der Fuzzy-Regler II, III und IV, wobei die jeweilig gemittelten Signale jeder Elektrode selbstverständlich einzeln ausgewertet werden. Die Ausgangssignale des Berechnungsmoduls VII wirken direkt auf eine Steuerung 28, welche für die Stellglieder 14 vorgesehen ist und diese einzeln ansteuern kann.

Mittels des Berechnungsmoduls VIII können die Zusatzreaktanzen 16 angesteuert werden, soweit dies erforderlich wird (nachrangige Regelung). Zu diesem Zweck wird eine Steuerung 29 von dem Berechnungsmodul VIII angesteuert, wobei die Steuerung 29 die Zusatzreaktanzen 16, von denen je eine pro Elektrode 13 vorgesehen ist, ansteuert. Auf diese Weise kann die Leistung der Lichtbögen 13 direkt verringert werden, indem in der Zusatzreaktanz 16 elektrische Leistungin Form von Blindleistung umgesetzt wird.

Das Berechnungsmodul IX schließlich enthält ein Programm, mittels dem die Lanze 18 und der Brenner 17 angesteuert werden kann (selbstverständlich können auch mehrere Brenner oder Lanzen lokal angesteuert werden). In Abhängigkeit von dem durch den Fuzzy-Regler V ausgegebenen Wert kann dadurch eine Drosselung oder Erhöhung der eingebrachten chemischen Wärmeleistung erfolgen. Hierbei können auch weitere Einflussgrößen eine Rolle spielen, die nicht näher dargestellt sind und die chemische Erfordernisse im Lichtbogenofen als Hintergrund haben.

## Patentansprüche

1. Verfahren zur Kontrolle eines Schmelzvorganges in einem Lichtbogenofen mit mindestens zwei Elektroden (13), bei dem durch Auswerten von durch das Innere eines Ofenbehälters (12) verlaufenden Schallsignalen zumindest eine Art von Kennwerten für die Verteilung von Schmelzgut, Schmelze und Schlacke in der Ofenfüllung erzeugt wird, inbesondere
• Kennwerte (SM) als Maß für auf die Ofenwand des Ofenbehälters (12) auftreffende thermische Strahlung und/oder
• Kennwerte (M) als Maß für die Stückigkeit des Schmelzgutes (20) im Volumen der Ofenfüllung, insbesondere im Bereich unterhalb der Elektroden (13) und/oder
• Kennwerte (MM) als Maß für die Veränderung des an der Ofenwand befindlichen Schmelzgutanteils,
**dadurch gekennzeichnet, dass**
• für den thermischen Einflussbereich jedes Lichtbogens der betreffenden Elektrode (13) lokale Kennwerte erzeugt werden,
• von den lokalen Kennwerten auf bestehende oder bevorstehende lokale thermische Belastungsspitzen in den Einflussbereichen der Lichtbögen geschlossen wird,
• in Abhängigkeit von den erzeugten Kennwerten vorrangig die Energieverteilung zwischen den Lichtbögen so lange wie erforderlich derart geändert wird, dass die thermischen Belastungsspitzen abgeschwächt werden oder deren Entstehung vermieden wird,
• in Abhängigkeit von den erzeugten Kennwerten nachrangig die thermische Leistung der Lichtbögen durch Verringerung der Sekundärspannung eines die Elektroden (13) versorgenden Ofentransformators (15) und/oder durch Verändern der Reaktanz einer seriell zu den Elektroden (13) geschalteten Zusatzreaktanz (16) so lange wie erforderlich verringert wird, wenn der durch die vorrangige Änderung der Energieverteilung erreichte Effekt nicht ausreicht oder es absehbar ist, dass dieser Effekt nicht ausreichen wird, um die thermischen Belastungsspitzen abzubauen oder zu vermeiden.

2. Verfahren nach Anspruch 1,
**dadurch gekennzeichnet,**
**dass** die Kennwerte (SM) für auf die Ofenwand auftreffende thermische Strahlung erzeugt werden, und diese mit einem Kennwert (E) für die seit Zugabe der letzten Charge Schmelzgut eingebrachte spezifischen Energie pro Masseneinheit Schmelzgut der letzten Charge verknüpft werden.

3. Verfahren nach Anspruch 2,
**dadurch gekennzeichnet,**
**dass** zusätzlich für den thermischen Einflussbereich jedes Lichtbogens lokale Kennwerte (T) für die thermische Belastung an der Ofenwand und/oder lokale Kennwerte (G) für den Gradienten der thermischen Belastung erzeugt werden, und diese Kennwerte (T, G) mit den lokal zugehörigen Kennwerten (SM) für auf die Ofenwand auftreffende thermische Strahlung verknüpft werden.

4. Verfahren nach Anspruch 1,
**dadurch gekennzeichnet,**
**dass** die Kennwerte (SM) für auf die Ofenwand auftreffende thermische Strahlung erzeugt werden und zusätzlich für den thermischen Einflussbereich jedes Lichtbogens lokale Kennwerte (T) für die thermische Belastung an der Ofenwand und/oder lokale Kennwerte (G) für den Gradienten einer Änderung dieser thermischen Belastung erzeugt werden, wobei diese Kennwerte (T, G) mit den lokal zugehörigen Kennwerten (SM) für auf die Ofenwand auftreffende thermische Strahlung verknüpft werden.

5. Verfahren nach einem der Ansprüche 2 oder 4,
**dadurch gekennzeichnet,**
**dass** erzeugten Kennwerten (T) für die thermische Belastung an der Ofenwand und/oder Kennwerten (G) für den Gradienten einer Änderung dieser thermischen Belastung die thermische Leistung der Lichtbögen durch Ansteuerung einer Ofentransformators und/oder einer Zusatzreaktanz so lange verringert wird, wie diese Kennwerte oberhalb eines für die Ofenwand kritischen Wertes liegen.

6. Verfahren nach einem der voranstehenden Ansprüche,
**dadurch gekennzeichnet,**
**dass** die Kennwerte (M) für die Stückigkeit der Schmelzgutes (20) im Volumen der Ofenfüllung, insbesondere im Bereich unterhalb der Elektroden (13) erzeugt werden, und diese mit einem Kennwert (E) für die seit Zugabe der letzten Charge Schmelzgut eingebrachte spezifischen Energie pro Masseneinheit Schmelzgut der letzten Charge verknüpft werden.

7. Verfahren nach einem der voranstehenden Ansprüche,
**dadurch gekennzeichnet,**
**dass** die Kennwerte (MM) als Maß für die Veränderung des an der Ofenwand anliegenden Schmelzgutanteils erzeugt werden, und diese mit einem Kennwert (E) für die seit Zugabe der letzten Charge Schmelzgut eingebrachte spezifische Energie pro Masseneinheit Schmelzgut der letzten Charge verknüpft werden.

8. Verfahren nach einem der voranstehenden Ansprüche,
**dadurch gekennzeichnet,**
**dass** die Wärmeleistung im Inneren des Ofenbehälters (12) zusätzlich durch chemische Reaktionen unter Einsatz eines Brenners (17) und/oder einer Lanze (18) erhöht wird, wobei in Abhängigkeit von den erzeugten Kennwerten die thermische Leistung der chemischen Reaktionen durch Verminderung der Zufuhr an Brennstoff zum Brenner (17) und/oder an Sauerstoff zur Lanze (18) so lange wie erforderlich verringert wird.

9. Verfahren nach Anspruch 8,
**dadurch gekennzeichnet,**
**dass** die Kennwerte (SM) für auf die Ofenwand auftreffende thermische Strahlung und/oder die Kennwerte (MM) als Maß für die Veränderung des den an der Ofenwand anliegenden Schmelzgutanteils erzeugt werden, und diese mit einem Kennwert (E) für die seit Zugabe der letzten Charge Schmelzgut eingebrachte spezifischen Energie pro Masseneinheit Schmelzgut der letzten Charge verknüpft werden.

10. Verfahren nach Anspruch 9,
**dadurch gekennzeichnet,**
**dass** zusätzlich für den thermischen Einflussbereich jedes Lichtbogens lokale Kennwerte (T) für die thermische Belastung an den Ofenwand und/oder lokale Kennwerte (G) für den Gradienten dieser thermischen Belastung erzeugt werden, und diese Kennwerte (T, G) mit den lokal zugehörigen Kennwerten (SM, MM) gemäß Anspruch 9 verknüpft werden.

11. Signalverarbeitungseinrichtung für einen Lichtbogenofen, mit einem maschinenlesbaren Programmcode, welcher Steuerbefehle aufweist, die die Signalverarbeitungseinrichtung zur Durchführung eines Verfahrens nach einem der Ansprüche 1 bis 9 veranlassen.

12. Maschinenlesbarer Programmcode für eine Signalverarbeitungseinrichtung für einen Lichtbogenofen, wobei der Programmcode Steuerbefehle aufweist, die die Signalverarbeitungseinrichtung zur Durchführung des Verfahrens nach einem der Ansprüche 1 bis 9 veranlassen.

13. Speichermedium mit einem darauf gespeicherten maschinenlesbaren Programmcode gemäß Anspruch 12.

## Claims

1. Method for controlling a melt process in an arc furnace having at least two electrodes (13), in which at least one type of characteristic values for the distribution of melt stock, melt and slag in the furnace fill is produced by evaluating sound signals propagating through the interior of a furnace container (12), in particular
• characteristic values (SM) as a measure of thermal radiation striking the furnace wall of the furnace container (12) and/or
• characteristic values (M) as a measure of the lumpiness of the melt stock (20) in the volume of the furnace fill, particularly in the region below the electrodes (13) and/or
• characteristic values (MM) as a measure of the change in the melt stock component located on the furnace wall,
**characterized in that**
• local characteristic values are generated for the thermal region of influence of each electric arc of the relevant electrode (13),
• existing or imminent local thermal load peaks in the regions of influence of the electric arcs are deduced from the local characteristic values,
• as a priority, the energy distribution between the electric arcs is modified as a function of the characteristic values generated for as long as required so that the thermal load peaks are attenuated or their occurrence is avoided,
• secondarily, the thermal power of the electric arcs is reduced as a function of the characteristic values generated by reducing the secondary voltage of a furnace transformer (15) supplying the electrodes (13) and/or by modifying the reactance of an auxiliary reactance (16) connected in series with the electrodes (13), for as long as required when the effect achieved by the priority change in the energy distribution is not sufficient, or it is predictable that this effect will not be sufficient, in order to reduce or avoid the thermal load peaks.

2. Method according to Claim 1, **characterized in that** the characteristic values (SM) for thermal radiation striking the furnace wall are generated, and these are correlated with a characteristic value (E) for the specific energy introduced per unit mass of melt stock of the last charge since the last charge of melt stock was added.

3. Method according to Claim 2, **characterized in that** local characteristic values (T) for the thermal load on the furnace wall and/or local characteristic values (G) for the gradient of the thermal load are additionally generated for the thermal region of influence of each electric arc, and these characteristic values (T, G) are correlated with the locally associated characteristic values (SM) for thermal radiation striking the furnace wall.

4. Method according to Claim 1, **characterized in that** the characteristic values (SM) for thermal radiation striking the furnace wall are generated and local characteristic values (T) for the thermal load on the furnace wall and/or local characteristic values (G) for the gradient of a change in this thermal load are additionally generated for the thermal region of influence of each electric arc, these characteristic values (T, G) being correlated with the locally associated characteristic values (SM) for thermal radiation striking the furnace wall.

5. Method according to one of Claims 2 and 4,
**characterized in that** generated characteristic values (T) for the thermal load on the furnace wall and/or characteristic values (G) for the gradient of a change in this thermal load the thermal power of the electric arcs is reduced by driving a furnace transformer and/or an auxiliary reactance until these characteristic values lie above a critical value for the furnace wall.

6. Method according to one of the preceding claims, **characterized in that** the characteristic values (M) for the lumpiness of the melt stock (20) in the volume of the furnace fill, particularly in the region below the electrodes (13), are generated, and these are correlated with a characteristic value (E) for the specific energy introduced per unit mass of melt stock of the last charge since the last charge of melt stock was added.

7. Method according to one of the preceding claims, **characterized in that** the characteristic values (MM) as a measure of the change in the melt stock component bearing on the furnace wall are generated, and these are correlated with a characteristic value (E) for the specific energy introduced per unit mass of melt stock of the last charge since the last charge of melt stock was added.

8. Method according to one of the preceding claims, **characterized in that** the thermal power inside the furnace container (12) is additionally increased by chemical reactions by using a burner (17) and/or a lance (18), the thermal power of the chemical reactions being reduced, as a function of the characteristic values generated, by reducing the supply of fuel to the burner (17) and/or oxygen to the lance (18) for as long as necessary.

9. Method according to Claim 8, **characterized in that** the characteristic values (SM) for thermal radiation striking the furnace wall and/or the characteristic values (MM) as a measure of the change in the melt stock component bearing on the furnace wall are generated, and these are correlated with a characteristic value (E) for the specific energy introduced per unit mass of melt stock of the last charge since the last charge of melt stock was added.

10. Method according to Claim 9, **characterized in that** local characteristic values (T) for the thermal load on the furnace wall and/or local characteristic values (G) for the gradient of this thermal load are additionally generated for the thermal region of influence of each electric arc, and these characteristic values (T, G) are correlated with the locally associated characteristic values (SM, MM) according to Claim 9.

11. Signal processing device for an arc furnace, having a machine-readable program code which comprises control instructions that cause the signal processing device to carry out the method according to one of Claims 1 to 9.

12. Machine-readable program code for a signal processing device for an arc furnace, which program code comprises control instructions that cause the signal processing device to carry out the method according to one of Claims 1 to 9.

13. Data medium having a machine-readable program code according to Claim 12 stored on it.

## Revendications

1. Procédé de contrôle d'un processus de fusion dans un four à arc électrique ayant au moins deux électrodes (13), dans lequel, en exploitant des signaux sonores se propageant à l'intérieur d'une cuve (12) de four, on produit au moins un type de valeurs caractéristiques de la répartition du produit à fondre, du produit fondu et des scories dans la charge du four, notamment
• des valeurs (SM) caractéristiques comme mesure du rayonnement thermique incident sur la paroi de la cuve (12) du four et/ou
• des valeurs (M) caractéristiques comme mesure de la présence de gros morceau du produit (20) à fondre dans le volume de la charge du four, notamment dans la partie en dessous des électrodes (13) et/ou
• des valeurs (MM) caractéristiques comme mesure de la modification de la proportion du produit à fondre se trouvant sur la paroi du four,
**caractérisé en ce que**
• on produit des valeurs caractéristiques locales pour la zone d'affluence thermique de chaque arc électrique de l'électrode (13) concernée,
• on tire des valeurs caractéristiques locales des conclusions sur des pointes de charge thermiques locales existantes ou à venir dans les zones d'influence des arcs électriques,
• en fonction des valeurs caractéristiques produites, on modifie en priorité la répartition d'énergie entre les arcs électriques aussi longtemps que cela est nécessaire de manière à affaiblir les pointes de charge thermiques ou à en empêcher l'apparition,
• en fonction des valeurs caractéristiques produites, on diminue aussi longtemps que cela est nécessaire, en second lieu, la puissance thermique des arcs électriques en diminuant la tension secondaire d'un transformateur (15) de four alimentant les électrodes (13) et/ou en modifiant la réactance d'une réactance (16) supplémentaire montée en série avec les électrodes (13) si l'effet atteint par la modification prioritaire de la répartition d'énergie ne suffit pas ou si l'on prévoit que cet effet ne sera pas suffisant pour faire disparaître les pointes de charge thermiques ou les empêcher.

2. Procédé suivant la revendication 1,
**caractérisé**
**en ce que** l'on produit les valeurs (SM) caractéristiques pour du rayonnement thermique incident sur la paroi du four et on les combine à une valeur (E) caractéristique de l'énergie spécifique introduite depuis l'addition de la dernière charge de produits à fondre par unité massique du produit à fondre de la dernière charge.

3. Procédé suivant la revendication 2,
**caractérisé**
**en ce que** l'on produit en outre pour la zone d'influence thermique de chaque arc électrique des valeurs (T) caractéristiques locales de la charge thermique sur la paroi du four et/ou des valeurs (G) caractéristiques locales du gradient de la charge thermique et on combine ces valeurs (T, G) caractéristiques aux valeurs (SM) caractéristiques associées localement du rayonnement thermique incident sur la paroi du four.

4. Procédé suivant la revendication 1,
**caractérisé**
**en ce que** l'on produit les valeurs (SM) caractéristiques du rayonnement thermique incident sur la paroi du four et, en outre, on produit pour la zone d'influence thermique de chaque arc électrique des valeurs (T) caractéristiques locales de la charge thermique sur la paroi du four et/ou des valeurs (G) caractéristiques locales du gradient d'une modification de cette charge thermique, ces valeurs (T, G) caractéristiques étant combinées aux valeurs (SM) caractéristiques associées localement du rayonnement thermique incident sur la paroi du four.

5. Procédé suivant l'une des revendications 2 ou 4,
**caractérisé**
**en ce que**, pour les valeurs (T) caractéristiques produites de la charge thermique sur la paroi du four et/ou des valeurs (G) caractéristiques du gradient d'une variation de cette charge thermique, on diminue la puissance thermique des arcs électriques en excitant un transformateur du four et/ou une réactance supplémentaire aussi longtemps que ces valeurs caractéristiques se trouvent au-dessus d'une valeur critique pour la paroi du four.

6. Procédé suivant l'une des revendications précédentes,
**caractérisé**
**en ce que** l'on produit les valeurs (M) caractéristiques de la présence de morceaux du produit (20) à fondre dans le volume de la charge du four, notamment, dans la partie en dessous des électrodes (13) et on les combine à une valeur (E) caractéristique de l'énergie spécifique, apportée depuis l'addition de la dernière charge de produit à fondre, par unité de masse de produit à fondre de la dernière charge.

7. Procédé suivant l'une des revendications précédentes,
**caractérisé**
**en ce que** l'on produit des valeurs (MM) caractéristiques comme mesure de la modification de la proportion du produit à fondre se trouvant sur la paroi du four et on les combine à une valeur (E) caractéristique de l'énergie spécifique, apportée depuis l'addition de la dernière charge de produit à fondre, par unité de masse de produit à fondre de la dernière charge.

8. Procédé suivant l'une des revendications précédentes,
**caractérisé**
**en ce que** l'on augmente la puissance calorifique à l'intérieur de la cuve (12) du four, en outre, par des réactions chimiques en utilisant un brûleur (17) et/ou une lampe, (18) dans lequel, en fonction des valeurs caractéristiques produites, on diminue aussi longtemps que cela est nécessaire la puissance thermique des réactions chimiques en diminuant l'apport de combustible aux brûleurs (17) et/ou d'oxygène à la lampe (18).

9. Procédé suivant la revendication 8,
**caractérisé**
**en ce que** l'on produit des valeurs (SM) caractéristiques du rayonnement thermique incident sur la paroi du four et/ou les valeurs (MM) caractéristiques comme mesure de la variation de la proportion de produit à fondre s'appliquant à la paroi du four et on les combine à une valeur (E) caractéristique de l'énergie spécifique, apportée depuis l'addition de la dernière charge de produit à fondre, par unité de masse de produit à fondre de la dernière charge.

10. Procédé suivant la revendication 9,
**caractérisé**
**en ce que** l'on produit, en outre, pour la zone d'influence thermique de chaque arc électrique, des valeurs (T) caractéristiques locales de la charge thermique sur la paroi du four et/ou des valeurs (G) caractéristiques locales du gradient de cette charge thermique et on combine ces valeurs (T,G) caractéristiques aux valeurs (SM, MM) caractéristiques associées localement suivant la revendication 9.

11. Dispositif de traitement du signal pour un four à arc électrique ayant un code de programme, qui peut être exploité par une machine et qui a des instructions de commande qui font que le dispositif de traitement du signal effectue un procédé suivant l'une des revendications 1 à 9.

12. Code de programme pouvant être exploité par une machine pour un dispositif de traitement du signal pour un four à arc électrique, dans lequel le code de programme a des instructions de commande qui font que le dispositif de traitement du signal effectue le procédé suivant l'une des revendications 1 à 9.

13. Support de mémoire ayant un code de programme qui y est mémorisé et qui peut être exploité par une machine suivant la revendication 12.
